# EUROPEAN PATENT APPLICATION

(11) **EP 2 101 114 A2**
(43) Date of publication of application: **16.09.2009**
(21) Application number: 08170444.7
(22) Date of filing: 02.12.2008
(51) Int. Cl.: F24D 3/14

(54) **Panel for laying pipes, particularly for underfloor climate control systems**

(30) Priority: 12.03.2008 IT VE20080009 U
(71) Applicant: Fabris S.R.L., 31038 Paese (TV) (IT)
(72) Inventor: Fabris, Rafaele, 31038, Paese TV (IT)
(74) Representative: Modiano, Micaela Nadia

(57) **Abstract**

A panel (1) for laying pipes (2), particularly for underfloor climate control systems, comprising a substantially flat slab (3) made of thermally insulating material, on the upper surface of which there is a plurality of first and second channels (4, 5) which are mutually substantially perpendicular and between which protrusions (6) having a polygonal or circular plan shape are formed; a metallic lamina (11) is arranged on the slab (3) and is provided with third and fourth channels (12, 13) that can be arranged axially in the first and second channels (4, 5). A plurality of through openings (14) is provided on the lamina (11) at the regions that connect the third and fourth channels (12, 13) and at least partially the protrusions (6).

## Description

The present invention relates to a panel for laying pipes, particularly for underfloor climate control systems.

Currently, the laying of pipes suitable for the flow of the heat transfer medium in underfloor climate control systems uses panels constituted by a flat slab, made of a thermally insulating material such as for example polystyrene or cork, from the upper surface of which several protrusions protrude, such protrusions being generally approximately cylindrical or prism-shaped and being arranged, in plan view, approximately equidistantly with respect to each other along two mutually perpendicular directions.

The upper surface of such panels and the protrusions provided thereon are generally covered by a thin film of thermoformed plastic material, which has a vapor insulation function.

After arranging mutually side-by-side a plurality of these panels of a known type, so as to cover a desired region of the screed of the future floor, it is possible to arrange one or more pipes of an underfloor climate control system in the interspaces formed between the various protrusions of the panels, so as to provide a desired path, for example a spiral path.

A concrete bed is then cast over the panels and the pipes, and for example tiles or wood-block flooring is laid, after the bed has set, so as to constitute the floor.

The circulation of the heat transfer medium in the pipes causes their heating, and in turn such pipes heat the overlying concrete bed, which then transfers the heat to the floor and then to the environment by radiation.

However, these known types of panel have a drawback; the transfer of heat from the pipes to the bed in fact occurs substantially at the surface of contact between them, which is limited; the time required to heat the entire mass of the bed is therefore very long (typically on the order of a few hours), with the consequence that the time needed to make the space to be climate-controlled reach a desired temperature is long, and this entails a great expenditure of energy.

Further, the delay in the distribution of heat within the bed can entail, particularly in the initial step of the activation of the climate control system, a lack of uniformity in the temperature of the various regions of the floor, which can reduce thermal comfort.

As a partial solution to this drawback, panels for laying pipes of underfloor climate control systems are known which are constituted by a flat slab made of thermally insulating material, on which a metal lamina, which is also flat, is fixed, generally by adhesive bonding.

The pipes are arranged on the aluminum lamina according to a desired plan arrangement and are then fixed to such lamina by means of appropriately provided clips, which are approximately shaped like an inverted letter U, are arranged so as to straddle such pipes and are then made to penetrate, with their free ends, into the metal lamina and into the underlying slab of thermally insulating material, so as to couple the pipes to such lamina and such slab.

The lamina and the pipes are then covered by a concrete bed.

The pipes transfer the heat to the regions of the bed that surround them, and the bed then releases part of such heat to the metal lamina, which then diffuses it over the entire surface of the bed, reducing the time required to heat the entire mass of such bed and consequently reducing the time required to obtain a desired temperature in the space to be climate-controlled.

However, even this known type of solution has a drawback; the arrangement of the pipes on the panel and their fixing by means of the clips in fact requires considerable time and further requires a certain skill on the part of the installation technician.

Further, an incorrect installation of the clips can damage the pipes and/or the panel.

Panels for laying pipes of underfloor climate control systems are also known which are constituted by a slab made of thermally insulating material and obtained from a plurality of modules that have an approximately square plan shape and can be mutually fixed at the respective perimetric edges; generally approximately cylindrical or prism-like protrusions protrude from the upper surface of such slab and are arranged, in plan view, so that they are approximately mutually equidistant, at a mutual distance that is approximately equal to the diameter of the pipes.

Laminas made of aluminum are arranged between the various protrusions and have a shape, in transverse cross-section, approximately like an inverted letter Ω, so as to form an end face having a substantially semicircular cross-section whose diameter is approximately equal to the diameter of the pipes, so as to allow the positioning of such pipes within it; the diameter of the end face of such wings is further smaller than the mutual distance of each pair of contiguous protrusions of the slab, so that such end face can be arranged, during use, between such contiguous protrusions.

Two mutually coplanar wings extend from the end face of the laminas and during use are arranged adjacent to the upper surface of the contiguous protrusions between which the end face is arranged.

After laying a plurality of panels mutually side by side, so as to cover the screed of the future floor, it is possible to arrange on the upper surface of such panels, so that they rest on the protrusions, the laminas described above, which are aligned or mutually perpendicular, so as to obtain a desired plan arrangement that corresponds to a desired path of the pipes; such pipes can then be arranged within the end face of the laminas, thus obtaining the desired path for such pipes.

In this case also, a concrete bed is cast over the panel and the pipes.

The presence of the laminas contributes to the diffusion of heat in the bed, making the distribution of the temperature of the floor more uniform and further reducing the time required to reach a desired temperature in the environment to be climate controlled.

However, even this known type of solution entails a drawback; the arrangement of the laminas on the panels in fact requires a long execution time and therefore increases the time and cost for installing the underfloor climate control system.

Panels for laying pipes of underfloor climate control systems are also known which are constituted by a slab made of thermally insulating material, on the surface of which there is a plurality of approximately mutually parallel rectilinear channels, whose width is approximately equal to the diameter of the pipes.

The upper surface of the slab is covered by a layer of metal, generally aluminum, which is shaped complementarily with respect to the channels provided thereon and on which there are therefore, at the channels, rectilinear and mutually parallel seats within which the pipes can be arranged.

These known types of panel ensure good heat transmission along the entire surface of the bed and further can be installed in a short time, but they have a drawback: due to the rectilinear shape of the channels and seats, it is in fact possible to arrange on these panels of a known type only portions of pipe that have a rectilinear profile in plan view.

In order to lay pipes in the arc-like portions of their path, panels are used which are constituted by a slab made of thermally insulating material, on the upper surface of which there are channels shaped so as to form, on such upper surface, protrusions that are cylindrical and/or shaped like a quarter circle in plan view.

In this case also, the upper surface of the slab is covered by a layer of aluminum, which is shaped complementarily to the channels and to the protrusions provided on such upper surface; the arc-like shape of the protrusions allows to arrange the pipes around such protrusions along curved paths.

However, even this known type of solution has a drawback; bending the aluminum lamina according to curved surfaces in fact is difficult and therefore entails high production costs for these known types of panel.

Further, the bending of the aluminum lamina along curved surfaces causes the formation of unwanted wrinkles or folds in some regions of such lamina, which can reduce locally the contact surface with the pipe, worsening heat exchange with such pipe.

Further, since bending of the aluminum lamina becomes increasingly difficult as the extension of the lamina increases, the dimensions of these known types of panel must be kept small, with a consequent increase in the installation times of such panels for an equal surface to be covered.

The aim of the present invention is to solve the above noted technical problems, eliminating the drawbacks of the cited background art, by providing an underfloor climate control system with low installation times that allows at the same time to achieve a uniform temperature distribution.

Within this aim, an object of the invention is to provide a panel for laying the pipes of an underfloor climate control system that allows to contain costs for its installation, including interconnection with the pipes for conveying a chosen fluid.

Another object of the invention is to allow to lay the pipes of an underfloor climate control system according to a path that has a desired geometry in plan view.

Another object of the invention is to provide an underfloor climate control system that is structurally simple and has low manufacturing costs.

This aim and these and other objects, which will become better apparent hereinafter, are achieved by a panel for laying pipes, particularly for underfloor climate control systems, which comprises a substantially flat slab made of thermally insulating material, on the upper surface of which there is a plurality of first and second channels which are mutually substantially perpendicular and between which protrusions having a polygonal or circular plan shape are formed, a metallic lamina being arranged on said slab and being provided with third and fourth channels that can be arranged axially in said first and second channels, **characterized in that** a plurality of through openings is provided on said lamina at the regions that connect said third and fourth channels and at least partially said protrusions.

Further characteristics and advantages of the invention will become better apparent from the following detailed description of a particular but not exclusive embodiment thereof, illustrated by way of non-limiting example in the accompanying drawings, wherein:

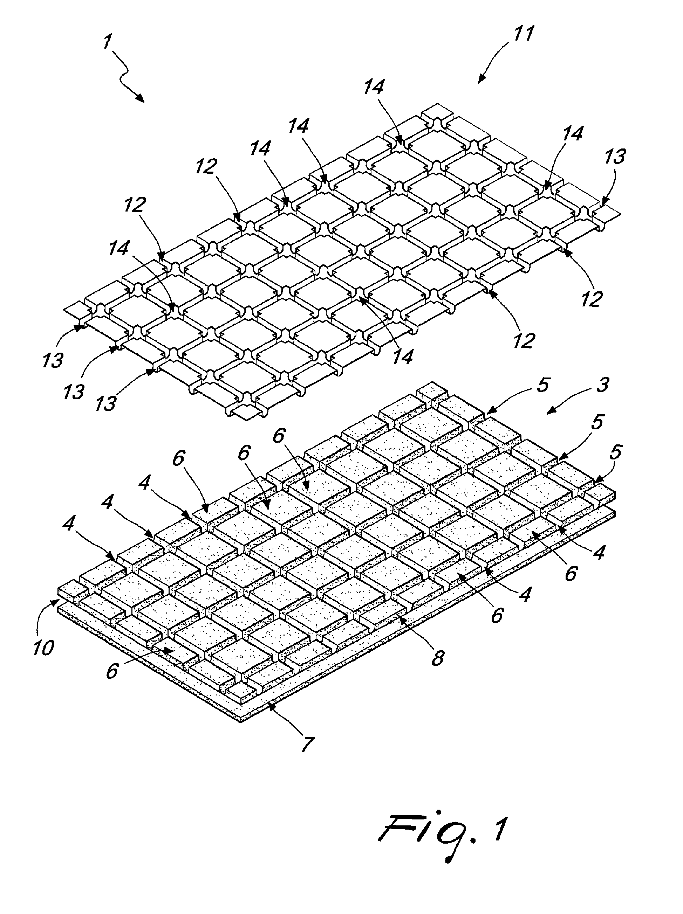

Figure 1 is an exploded perspective view of the panel according to the invention;

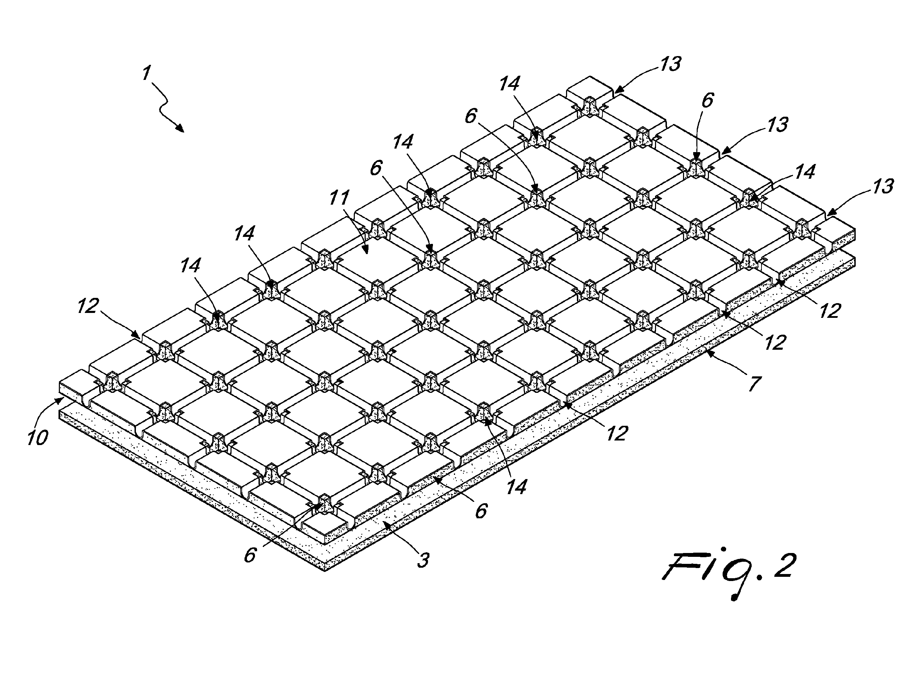

Figure 2 is a perspective view of the panel of Figure 1;

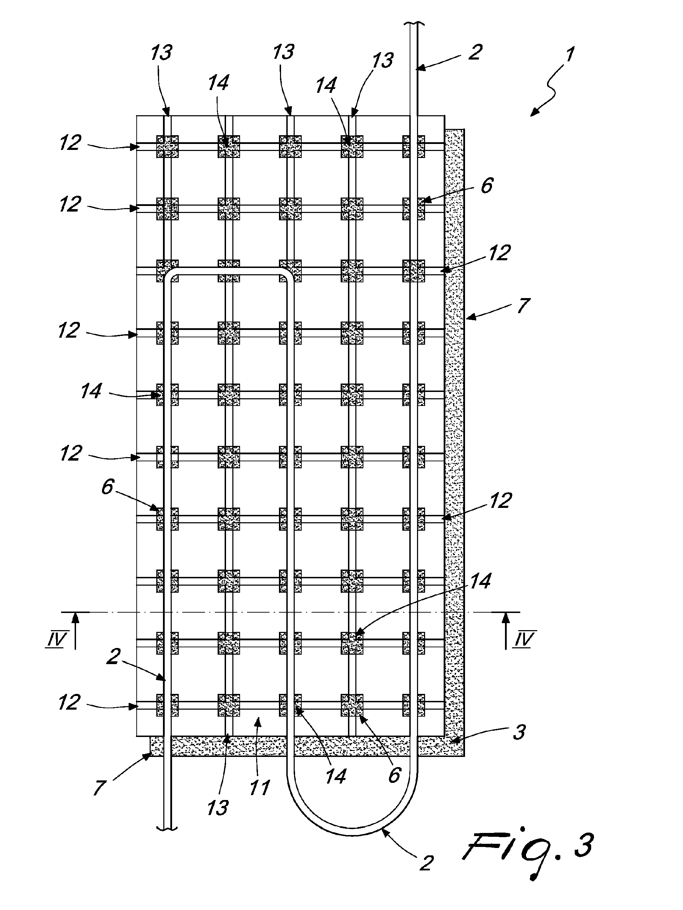

Figure 3 is a plan view of the panel according to the preceding figures, with a pipe of an underfloor climate control system applied thereto;

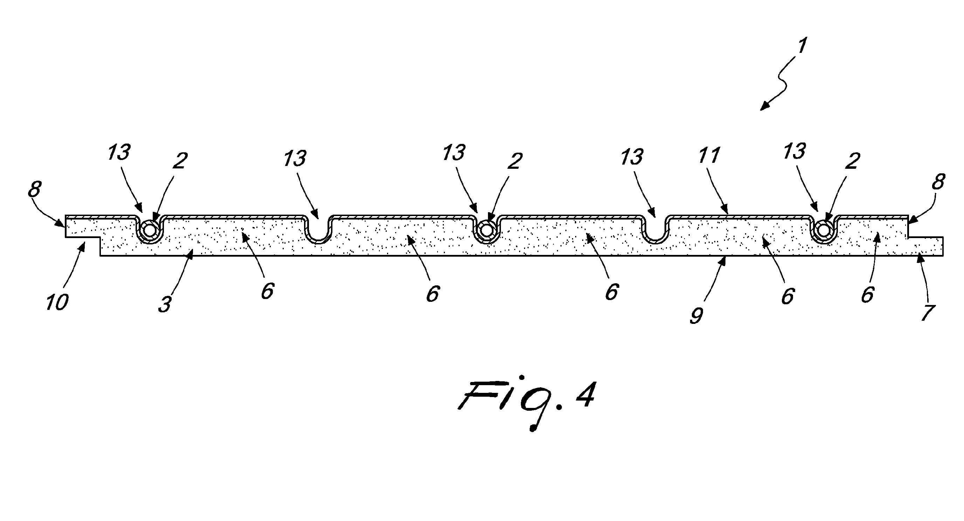

Figure 4 is a sectional view, taken along the line IV-IV of Figure 3.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a panel for laying pipes 2, particularly for underfloor climate control systems.

Advantageously, the panel 1 comprises a substantially flat slab 3, made of a thermally insulating material, such as for example expanded polystyrene, which has a preferably but not necessarily approximately rectangular or square plan shape.

A plurality of first channels 4 and second channels 5 are provided on the upper surface of the slab 3, are mutually substantially perpendicular and are preferably parallel respectively to the transverse axis and to the longitudinal axis of the slab 3.

The first channels 4 and the second channels 5 form on the slab 3 protrusions 6 that have a preferably polygonal or circular plan shape; in the embodiment shown in the accompanying figures, the protrusions 6 have a substantially square plan shape.

Advantageously, at the perimetric edges of the slab 3 there are means for connection to an additional slab 3, which are constituted for example by a tab 7 that protrudes approximately at right angles from a lateral surface 8 of the slab 3, at two contiguous sides thereof; the tab 7 affects the lateral surface 8 of the slab 3 starting from a flat lower surface 9 thereof, and along part of its height.

Further, such connection means comprise a slot 10, which is shaped approximately complementarily to the tab 7 and is formed on the lateral surface 8 of the slab 3, at the two sides thereof that are not affected by the tab 7 and starting from the lower surface 9 of the slab 3; two slabs 3 can thus be mutually connected by arranging them mutually side by side so that the tab 7 that protrudes from one of the slabs 3 is arranged within the contiguous slot 10 of the other slab 3.

A metallic lamina 11, preferably made of aluminum, is arranged on the slab 3, and third channels 12 and fourth channels 13 are arranged therein and can be positioned axially respectively in the first channels 4 and in the second channels 5.

The third channels 12 and the fourth channels 13 have a substantially semicircular or U-shaped transverse cross-section, so as to allow to position the pipes 2 inside them.

Advantageously, a plurality of through openings 14 are provided on the lamina 11, at the regions connecting the first channels 4 and the second channels 5 and at least partially the protrusions 6.

In the embodiment shown in the accompanying figures, in which the protrusions 6 are shaped approximately like a parallelepiped with a square plan shape, the openings 14 have, in plan view, a substantially square configuration and affect the protrusions 6 at their lateral edges and at the corners of their upper surface.

The presence of the openings 14 facilitates the bending of the lamina 11 that is needed in order to obtain the third and fourth channels 12 and 13, eliminating the formation of unwanted wrinkles or folds in the lamina 11 and thus ensuring an optimum heat exchange between the lamina 11 and the pipes 2.

Further, the presence of the openings 14 at the edges of the protrusions 6 that are contiguous to the regions connecting the first and second channels 4 and 5 allows to bend easily the pipes 2 around the protrusions 6, since the edges of the protrusions 6 are not covered by the lamina 11, and can thus be deformed in order to allow an easier curving of the pipes 2.

Advantageously, the lamina 11 is fixed to the underlying slab 3 by interlocking.

Use of the invention is therefore as follows.

With reference to the figures, it is possible to arrange a plurality of panels 1 to cover the screed, not shown in the accompanying figures, of the future floor, arranging the panels 1 side by side, with the tabs 7 thereof arranged in the slots 10 of the contiguous panels 1.

It is thus possible to arrange one or more pipes 2 on the panels 1, inserting the pipes 2 in the third and fourth channels 12 and 13 of the laminas 11; the possibility to arrange the pipe or pipes 2 within the third and fourth channels 12 and 13, which are mutually perpendicular, and to curve the one or more pipes 2 around the protrusions 6, allows to obtain for the one or more pipes 2 the desired arrangement in plan view.

A concrete bed, not shown in the accompanying figures, can then be cast over the panels 1 and the pipes 2, and for example tiles or wood block flooring, not shown in the figures, can be laid on such bed once it has hardened; as an alternative to the concrete bed, it is possible to arrange over the panel 1 and the pipes 2 a dry covering, such as for example a prefabricated slab made for example of a mixture of gypsum loaded with suitable fibers, onto which the tiles or the wood blocks that constitute the floor are then laid.

In the case of a heating system, the circulation of the heat transfer fluid, at a temperature that is higher than the ambient temperature, in the pipes 2 causes their heating, and in turn the pipes 2 heat the regions of the lamina 11 that are adjacent to them; heat is transmitted rapidly to the entire lamina 11 and then to the overlying concrete bed or dry covering, thus reducing the time needed to heat the entire mass of the slab 3 or dry covering.

The concrete bed or dry covering then transfers the heat to the floor and then to the environment by radiation.

It has thus been found that the invention has achieved the proposed aim and objects, a panel for laying pipes, particularly for underfloor climate control systems, having been devised which, by way of the presence of the metallic lamina arranged above the slab made of thermally insulating material, allows to obtain, once it is installed, rapid and uniform heating of the bed or dry covering, thus reducing the time needed to reach a desired temperature in the environment to be climate-controlled, further improving thermal comfort and reducing significantly the operating costs of the climate control system.

Further, thanks to the presence of the openings on the metallic lamina, its bending is very easy, and this reduces the costs for its production.

The presence of the openings on the metallic lamina further allows to achieve the bending thereof without forming unwanted wrinkles or folds; contact between the pipes and the metallic lamina, and accordingly the exchange of heat between these elements, are therefore ensured.

Further, the presence of the openings at the edges of the protrusions allows to deform them in order to achieve the curving of the pipes around them; it is therefore very easy to obtain the desired path for the pipes.

Further, the production and installation costs of the panel according to the invention remain low, since it is provided only by means of components that are easy to produce and/or assemble.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly to coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. VE2008U000009 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel (1) for laying pipes (2), particularly for underfloor climate control systems, comprising a substantially flat slab (3) made of thermally insulating material, on the upper surface of which there is a plurality of first (4) and second (5) channels which are mutually substantially perpendicular and between which protrusions (6) having a polygonal or circular plan shape are formed, a metallic lamina (11) being arranged on said slab (3) and being provided with third (12) and fourth (13) channels that can be arranged axially in said first and second channels, **characterized in that** a plurality of through openings (14) is provided on said lamina (11) at the regions that connect said third (12) and fourth (13) channels and at least partially said protrusions (6).

2. The panel according to claim 1, **characterized in that** said protrusions (6) are substantially polygonal or square or rectangular in plan view, said openings (14) having, in plan view, a polygonal shape and affecting said protrusions (6) at the corners thereof that face said regions for connecting said third (12) and fourth (13) channels.

3. The panel according to claims 1 and 2, **characterized in that** said openings (14) affect said corners of said protrusions (6) at their lateral surface.

4. The panel according to claims 1 and 2, **characterized in that** said openings (14) affect said corners of said protrusions (6) at their upper surface.

5. The panel according to claims 1 and 2, **characterized in that** said openings (14) affect said corners of said protrusions (6) both at their lateral surface and at their upper surface.

6. The panel according to one or more of the preceding claims, **characterized in that** said third (12) and fourth (13) channels have a substantially semicircular or U-shaped transverse cross-section, so as to allow to position said pipes (2) inside them.

7. The panel according to one or more of the preceding claims, **characterized in that** said lamina (11) is fixed to said underlying slab (3) by interlocking.

8. The panel according to one or more of the preceding claims, **characterized in that** said slab (3) has an approximately rectangular or square plan shape, and **in that** said first (4) and second (5) channels are approximately parallel respectively to the transverse axis and to the longitudinal axis of said slab (3).

9. The panel according to one or more of the preceding claims, **characterized in that** means for connection to an additional slab (3) are provided at the perimetric edges of said slab (3).

10. The panel according to claims 1, 8 and 9, **characterized in that** said connecting means are constituted by a tab (7), which protrudes approximately at right angles from the lateral surface (8) of said slab (3), at two contiguous sides thereof, affecting said lateral surface (8) of said slab (3) starting from the flat lower surface (9) thereof and along part of its height, said connecting means (7) comprising a slot (10), which is shaped approximately complementarily to said tab (7) and is provided on said lateral surface (8) of said slab (3), at the two sides thereof that are not affected by said tab, and starting from said lower surface (9) of said slab (3), two of said slabs (3) being mutually connectable by arranging them mutually side by side so that said tab (7) that protrudes from one of said slabs (3) is arranged within said contiguous slot (10) of the other slab (3).
